(19) Europäisches Patentamt
European Patent Office
Office européen des brevets

(11) **EP 2 800 172 A1**

(12) **EUROPEAN PATENT APPLICATION**
published in accordance with Art. 153(4) EPC

(43) Date of publication:
**05.11.2014 Bulletin 2014/45**

(51) Int Cl.:
***H01M 4/139*** *(2010.01)*

(21) Application number: **11878358.8**

(22) Date of filing: **27.12.2011**

(86) International application number:
**PCT/JP2011/080315**

(87) International publication number:
**WO 2013/098968 (04.07.2013 Gazette 2013/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Kabushiki Kaisha Toshiba Minato-ku Tokyo 105-8001 (JP)**

(72) Inventors:
• **MORISHIMA, Hideaki Tokyo 105-8001 (JP)**

• **UEMATSU, Ikuo Tokyo 105-8001 (JP)**
• **NAKAHATA, Masaomi Tokyo 105-8001 (JP)**

(74) Representative: **Hoffmann Eitle Patent- und Rechtsanwälte PartmbB Arabellastraße 30 81925 München (DE)**

(54) **METHOD FOR PRODUCING ELECTRODE AND METHOD FOR PRODUCING NON-AQUEOUS ELECTROLYTE BATTERY**

(57)    According to one embodiment, a manufacturing method of an electrode includes supplying a current collector, coating the current collector with a slurry and drying the slurry. In the manufacturing method of the electrode, the current collector is supplied onto a backup roll including annular protruding portions formed on an outer circumferential surface of the backup roll. A surface of the current collector excluding a portion arranged on a plurality of the annular protruding portions is coated with slurry containing an active material. And, then, the slurry is dried.

FIG.3

**Description**

Technical Field

Embodiments described herein relate to a manufacturing method of an electrode and a manufacturing method of a non-aqueous electrolyte battery.

Background Art

In recent years, non-aqueous electrolyte batteries attract widespread attention as power sources for hybrid electric vehicles or accumulating electricity devices for generators using natural energy such as sunlight and wind energy. For these uses, the capability of instantaneously accumulating or discharging a large current, that is, a secondary battery with high large-current characteristics is required because temporal changes of load or production of electricity are wild.
It is necessary for such a secondary battery with high large-current characteristics to make the electric resistance inside the battery as low as possible to minimize a voltage drop even when a large current is made to flow. It is known to be effective for this purpose to make an electrode layer formed by being coated and dried on a current collector as thin as possible.
On the other hand, the method described below is generally used as a manufacturing method of an electrode for non-aqueous electrolyte batteries. First, an electrode material containing active material is dispersed in an organic solvent or water to create a slurry state. A current collector is wound on the surface of a backup roll in a cylindrical shape. A slurry discharging apparatus such as a die head is caused to discharge slurry to coat the current collector on the surface of the backup roll with the slurry. Then, the slurry is dried to obtain an electrode. In this case, the interval becomes narrower with a decreasing thickness of the coated slurry and may be as narrow as a few tens to 100 $\mu$m. The interval is one between the tip of the die head, which is a slurry discharging apparatus, and the surface of the current collector whose rear side is supported by the backup roll. In this case, if active material particles or particles of other materials contained in the slurry or aggregates formed by active material particles or particles of other materials being aggregated whose size exceeds a few tens to 100 $\mu$m are present, such particles or aggregates cannot pass between the tip of the discharging apparatus and the current collector and get stuck there. This may trigger tearing of the current collector to make the electrode defective or rupture of the current collector, forcing the coating apparatus to stop. Particularly if the current collector is ruptured and the coating apparatus is forcibly stopped, it takes time to remove the ruptured electrode and to install a new electrode, leading to significantly decreased productivity.

Citation List

Patent Literature

Patent Literature 1: Jpn. Pat. Appln. KOKAI Publication No. 2002-313327
Patent Literature 2: Jpn. Pat. Appln. KOKAI Publication No. 4-061959
[Patent Literature 3] Jpn. Pat. Appln. KOKAI Publication No. 2007-029789
[Patent Literature 4] Jpn. Pat. Appln. KOKAI Publication No. 2003-157835

Summary of Invention

Technical Problem

The subject to be settled by the present invention is to provide a manufacturing method of an electrode capable of preventing tearing and rupture of a current collector when the current collector is coated with slurry and a manufacturing method of a non-aqueous electrolyte battery.

Solution to Problem

According to one embodiment, a manufacturing method of an electrode includes supplying a current collector, coating the current collector with a slurry and drying the slurry. In the manufacturing method of the electrode, the current collector is supplied onto a backup roll including annular protruding portions formed on an outer circumferential surface of the backup roll. A surface of the current collector excluding a portion arranged on a plurality of the annular protruding portions is coated with slurry containing an active material. And, then, the slurry is dried.

According to another embodiment, there is provided a manufacturing method of a non-aqueous electrolyte battery including a positive electrode, a negative electrode, and a non-aqueous electrolyte. At least one electrode of the positive electrode and the negative electrode is manufactured by the method according to the embodiment.

Brief Description of Drawings

FIG. 1 is a perspective view exemplifying a backup roll used in an embodiment;
FIG. 2 is a plan view when the backup roll in FIG. 1 is viewed from an end side thereof;
FIG. 3 is a schematic diagram showing a coating process using the backup roll in FIG. 1;
FIG. 4 is a perspective view showing a current collector carried by the backup roll in FIG. 1;
FIG. 5 is a perspective view showing the current collector coated with slurry on one side thereof;
FIG. 6 is a perspective view showing the current collector coated with slurry on both sides thereof;
FIG. 7 is a perspective view showing an electrode manufactured by a method according to an embodiment;
FIG. 8 is a perspective exploded view showing a battery manufactured by the method according to the embodiment; and
FIG. 9 is a perspective partial exploded view of an electrode group used in the battery shown in FIG. 8.

Description of Embodiments

Embodiments will be described below with reference to drawings.

(First embodiment)

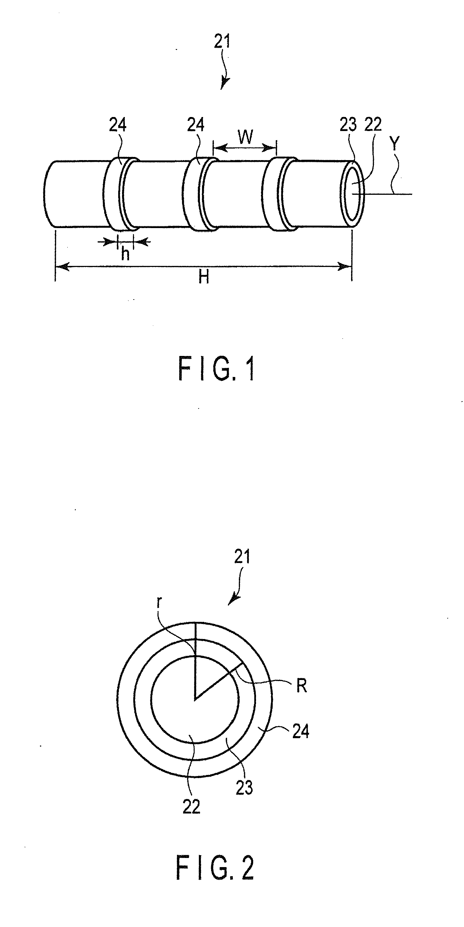

As shown in FIGS. 1 and 2, a backup roll 21 includes a cored bar 22, a surface layer 23 formed on the cored bar 22, and a plurality of protruding portions 24 formed on the outer circumferential surface of the surface layer 23. Each of the protruding portions 24 has an annular shape and covers the outer circumferential surface of the surface layer 23. An interval W is provided between the protruding portions 24. The interval W is changed in accordance with the width of slurry with which the current collector is coated.

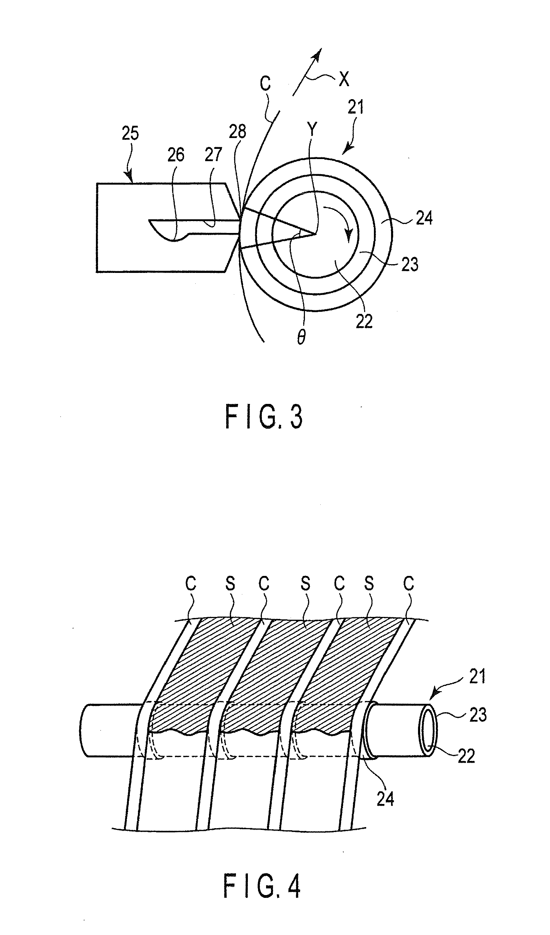

As shown in FIG. 3, a current collector C in a long shape is supplied from a current collector supply apparatus (not shown) to the backup roll 21. The current collector C is in contact with the protruding portions 24 of the backup roll 21 in a state in which a tension is applied in a longitudinal direction (moving direction of the current collector C) X thereof. Thus, the current collector C is in a floating state from the surface layer 23 in locations where no protruding portion 24 is provided and thus, a space is present between the current collector C and the surface layer 23. That is, the current collector C is supported by the plurality of protruding portions 24 and a gap is present between the current collector C and the surface layer 23 positioned between the protruding portions 24. The current collector C is coated with slurry on the surface thereof above the surface layer 23 positioned between the protruding portions 24.

As shown in FIG. 3, a slurry coating apparatus includes a die head 25. The die head 25 includes a liquid storage portion 26 which receives the supply of slurry from a slurry supply apparatus (not shown), a die slit 27 connected to and communicating with the liquid storage portion 26, and a plurality of slurry discharge ports 28 provided at the tip of the die slit 27. The slurry discharge port 28 is opposite to the respective surface layer 23 between the protruding portions 24 of the backup roll 21. The number of the slurry discharge ports 28 can be changed in accordance with the row number of slurry with which the current collector C is coated. The number of the slurry discharge ports 28 is not limited to a plural number and may be 1.

The slurry is prepared in a slurry state by, for example, dispersing an electrode material containing active material in an organic solvent or water. The active material is not particularly limited, but, for example, a positive electrode active material or a negative electrode active material of a non-aqueous electrolyte battery can be cited.

For example, a sheet in a foil form made of metal or alloy can be used as the current collector C.

The slurry coating process will be described. The current collector C in a long shape is supplied onto the backup roll 21 by the current collector supply apparatus. Because a tension is applied to the current collector C in the longitudinal direction (moving direction of the current collector C) X thereof, the current collector C is in contact with the protruding portions 24 with a gap between the current collector C and the surface layer 23. The slurry supplied from the slurry supply apparatus to the liquid storage portion 26 passes through the die slit 27, and followed by being supplied to the surface of the current collector C through the slurry discharge ports 28. The slurry is supplied to the surface of the current collector C above the surface layer 23 positioned between the protruding portions 24. A gap is present between the slurry discharge ports 28 and the surface of the current collector C. The size of the gap is adjusted in accordance with the thickness of slurry with which the current collector C is coated and may be a few tens to 100 $\mu$m. If the coated slurry is made thinner, the ratio of particles and aggregates that cannot pass through the gap between the slurry discharge ports 28 and the current collector C increases, but since a gap is present between the current collector C and the surface layer 23, the current collector C can be curved toward the surface layer 23 following particles or aggregates and the gap between the slurry discharge ports 28 and the current collector C can be widened. As a result, stagnation of particles or aggregates in one location after passing through the gap between the slurry discharge ports 28 and the current collector C can be avoided and therefore, the current collector can be prevented from being torn or ruptured. Accordingly, the electrode defective can be avoided and the coating apparatus can be prevented from being stopped.. Therefore, as shown in FIG. 4, the surface of the current collector C can uniformly be coated with slurry S excluding the portion thereof corresponding to the protruding portions 24. The portion with no coated slurry S functions as a collecting tab.

It is desirable that the backup roll 21 satisfy a following formula (1):

$$0.1 \leq (r-R) \leq 10 \qquad 1)$$

As shown in FIG. 2, r is an outside radius (mm) of the protruding portion 24 and R is an inside radius (mm) of the protruding portion 24. R is equal to the radius up to the surface layer 23 of the backup roll 21. By setting (r-R) to 0.1 mm or more, ample room for deformation of the current collector C on the backup roll 21 can be provided and so tearing and rupture of the current collector C can still be reduced. With increasing (r-R), the diameter of the backup roll body becomes relatively thinner and the strength thereof may be insufficient. By setting (r-R) to 10 mm or less, the strength of the backup roll body can be made sufficient. The particularly preferable range of (r-R) is $0.2 \leq (r-R) \leq 5$.

It is desirable that the backup roll 21 satisfy a following formula (2):

$$5 \leq h \leq 50 \qquad 2)$$

As shown in FIG. 1, h is a width (mm) of the protruding portion 24 parallel to a rotation axis Y of the backup roll 21. H is a length (mm) thereof in a direction parallel to the rotation axis Y of the backup roll 21.

A sufficient area of the protruding portions 24 for supporting the current collector can be secured by setting h to 5 mm or more and thus, the current collector C near edges of the protruding portions 24 can be inhibited from being wrinkled or creased by a pressure at which the current collector C is pressed against the protruding portions 24. Thus, defects in production can be reduced by setting h to 5 mm or more. However, if h is too large, the width of the electrode that can be coated becomes narrow, which makes the effective width of the coating apparatus narrower, leading to lower production efficiency, and therefore, h is preferably 50 mm or less. The particularly preferable range of h is $10 \leq h \leq 40$.

It is desirable that the current collector C be in contact with the protruding portion 24 of the backup roll 21 in such a way that a following formula (3) is satisfied:

$$0.01 \leq \theta \leq 0.5 \qquad 3)$$

As shown in FIG. 3, $\theta$ is the angle of circumference (radian) corresponding to the length of an arc (around the rotation axis Y) in a portion where the current collector C is in contact with the protruding portions 24 of the backup roll 21 in an end face viewed from the rotation axis Y of the backup roll 21.

The pressure at which the current collector C is pressed against the protruding portions 24 can be made sufficient by setting $\theta$ to 0.01 radian or more so that the current collector C can be prevented from floating from the protruding portions 24 when the current collector C is coated with slurry. As a result, nonuniformity of the amount of coating can be reduced. Moreover, the current collector C near edges of the protruding portions 24 can be inhibited from being wrinkled or creased by a pressure at which the current collector C is pressed against the protruding portions 24 by setting $\theta$ to 0.5 radians or less and thus, defects of production can be reduced. The particularly preferable range of $\theta$ is $0.02 \leq \theta \leq 0.3$.

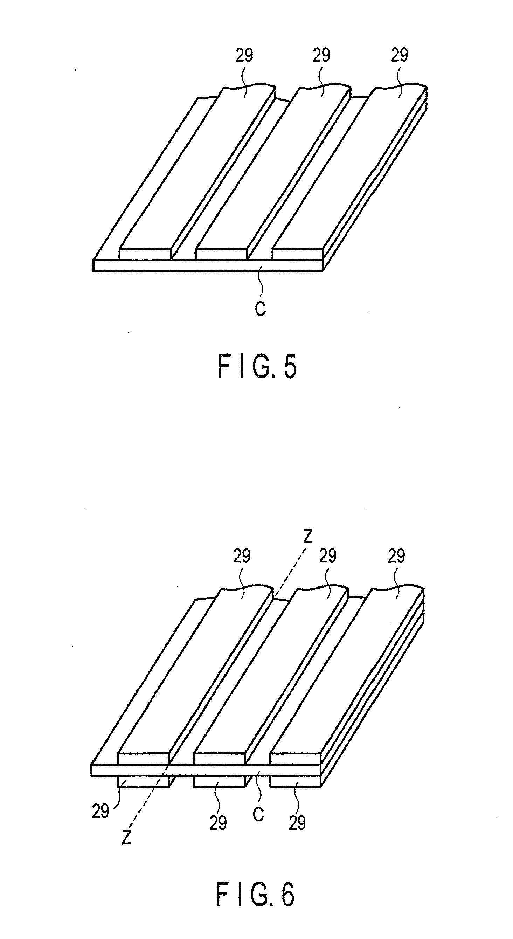

By carrying out a process of drying slurry after the coating process described above, as shown in FIG. 5, the current collector C in which a plurality of rows of a layer containing active material 29 is formed on one side can be obtained. Subsequently, by carrying out the coating process using the backup roll 21 on the remaining side of the current collector C and then the process of drying slurry, as shown in FIG. 6, the current collector C in which the plurality of rows of the layer containing active material 29 is formed on both sides can be obtained.

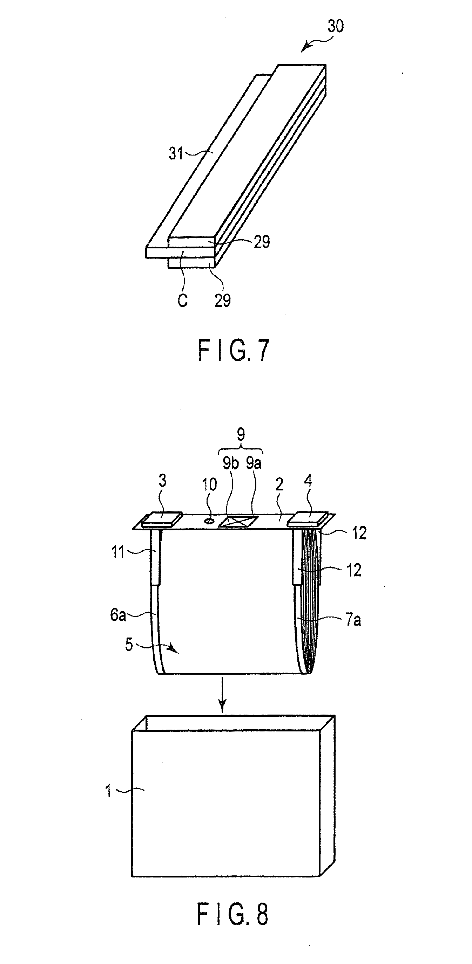

Subsequently, after press molding to compress the layer containing active material 29, an electrode 30 shown in FIG. 7 can be obtained by cutting along a boundary Z between the current collector C and the layer containing active material 29. The obtained electrode 30 has the layer containing active material 29 formed excluding one long side of the current collector C. The long side on which the layer containing active material 29 is not formed functions as a collecting tab 31. Incidentally, the current collector C may be cut before press molding.

The slurry coating apparatus is not limited to a coating apparatus including a die head and, for example, an applicator roll may be used.

According to a first embodiment described above, a current collector is supplied onto a backup roll having a plurality of annular protruding portions formed on the outer circumferential surface thereof and therefore, a gap can be provided between the outer circumferential surface positioned between the annular protruding portions and the current collector. Next, room for deformation of the current collector is provided following the shape of large particles or aggregates mixed in slurry by coating the surface of the current collector excluding the portion thereof arranged on the annular protruding portions with slurry containing active material and therefore, stagnation of particles or aggregates in one location can be avoided. Consequently, electrodes can be manufactured without the current collector being torn or ruptured regardless of the thickness of coated slurry on the current collector.

If the backup roll is not opposed to the slurry coating apparatus and, instead the backup roll is arranged prior to the slurry coating apparatus, a current collector not supported by the backup roll is coated with slurry, which makes looseness or distortion of the current collector during coating more likely and increases variations of the amount of coating.

(Second embodiment)

According to a second embodiment, a manufacturing method of a battery including a positive electrode, a negative electrode, and a non-aqueous electrolyte is provided. At least an electrode of the positive electrode and the negative electrode is manufactured by a method according to the first embodiment. Slurry and a current collector used for the manufacture of a positive electrode and a negative electrode will be described.

Positive electrode slurry is prepared by suspending an electrode material containing a positive electrode material, a conductive agent, and a binder in an appropriate solvent. For example, N-methyl ethyl pyrolidone can be cited as the solvent. The weight ratio of the total amount of the positive electrode material, the conductive agent, and the binder to the solvent is desirably 50:50 to 80:20.

As the positive electrode material, general lithium transition-metal composite oxide can be used. For example, such oxide includes $LiCoO_2$, $Li_{1+a}(Mn,Ni,Co)_{1-a}O_2$ (0<a<0.2), $Li_{1+b}Ni_{1-c}M_cO_2$ (0<b<0.2, 0<c<0.4, M is one or more selected from the group consisting of Co, Al and Fe), $Li_{1+d}Mn_{2-d-e}M'_eO_4$ (M' is one or more selected from the group consisting of Mg, Al, Fe, Co and Ni), and $LiMPO_4$ (M is Fe, Co, or Ni).

The conductive agent can improve collecting performance and reduce contact resistance with a current collector. As the conductive agent, for example, carbon material such as acetylene black, carbon black, and graphite can be cited.

The binder can bind a positive electrode material and a conductive agent. As the binder, for example, polytetrafluoroethylene (PTFE), polyvinylidene fluoride (PVdF), and fluorine-contained rubber can be cited.

Regarding the compounding ratio of the positive electrode material, conductive agent, and the binder, it is preferable that the positive electrode material be 80% by weight or more and 95% by weight or less, the positive electrode conductive agent be 3% by weight or more and 18% by weight or less, and the binder be 2% by weight or more and 17% by weight or less. Regarding the positive electrode conductive agent, the above effect can be achieved by being 3% by weight or more and dissolution of the non-aqueous electrolyte on the surface of the positive electrode conductive agent in a state of high-temperature preservation can be reduced by being 18% by weight or less. Regarding the binder, sufficient electrode strength can be obtained by being 2% by weight or more and a content of an insulator in the electrode can be reduced to reduce internal resistance by being 17% by weight or less.

The positive electrode current collector is preferably aluminum foil or aluminum alloy foil containing elements such as Mg, Ti, Zn, Mn, Fe, Cu, or Si.

Negative electrode slurry is prepared by suspending, for example, a negative electrode material, a conductive agent, and a binder in an appropriate solvent. For example, N-methyl ethyl pyrolidone can be cited as the solvent. The weight ratio of the total amount of the negative electrode material, the conductive agent, and the binder to the solvent is desirably 50:50 to 80:20.

As the negative electrode active material, for example, titanium containing metal composite oxide can be used and titanium base oxide that does not contain lithium when the titanium base oxide is synthesized can be cited.

As the lithium titanium oxide, for example, $Li_{4+x}Ti_5O_{12}$ ($0 \leq x \leq 3$) having the spinel structure and $Li_{2+y}Ti_3O_7$ ($0 \leq y \leq 3$) having the ramsdellite structure can be cited.

As the titanium base oxide, $TiO_2$ and metal composite oxide containing Ti and at least one element selected from a group consisting of P, V, Sn, Cu, Ni, Co, and Fe. $TiO_2$ is preferably the anatase type of low crystal whose heat treatment is 300 to 500°C. As the metal composite oxide containing Ti and at least one element selected from a group consisting of P, V, Sn, Cu, Ni, Co, and Fe, for example, $TiO_2-P_2O_5$, $TiO_2-V_2O_5$, $TiO_2-P_2O_5-SnO_2$, and $TiO_2-P_2O_5-MeO$ (Me is at least one element selected from a group consisting of Cu, Ni, Co, and Fe) can be cited. The metal composite oxide preferably has a micro structure in which the crystal phase and the amorphous phase coexist or the amorphous phase alone exists. Thanks to such a micro structure, the cycle performance can significantly be improved. Among others, lithium titanium oxide and metal composite oxide containing Ti and at least one element selected from a group consisting of P, V, Sn, Cu, Ni, Co, and Fe are preferable.

As the conductive agent, for example, acetylene black, carbon black, and graphite can be cited.

The binder can bind a negative electrode material and a conductive agent. As the binder, for example, polytetrafluoroethylene (PTFE), polyvinylidene fluoride (PVdF), fluorine-contained rubber, and styrenebutadiene rubber can be cited.

Regarding the compounding ratio of the negative electrode material, negative electrode conductive agent, and the binder, it is preferable that the negative electrode material be 70% by weight or more and 96% by weight or less, the negative electrode conductive agent be 2% by weight or more and 28% by weight or less, and the binder be 2% by weight or more and 28% by weight or less. If the negative electrode conductive agent is 2% by weight or less, collecting performance of the negative electrode layer is degraded and large-current characteristics of a non-aqueous electrolyte secondary battery are degraded. If the binder is 2% by weight or less, binding properties of the negative electrode layer and negative electrode current collector are degraded and cycle characteristics are degraded. On the other hand, the negative electrode conductive agent and the binder are each preferably 28% by weight or less in terms of higher capacity.

As the negative electrode current collector, for example, aluminum foil, aluminum alloy foil, and copper foil can be cited. The preferable negative electrode current collector includes aluminum foil and aluminum alloy foil containing such elements as Mg, Ti, Zn, Mn, Fe, Cu, Si or the like that are electrochemically stable in a potential range higher than 1.0 V.

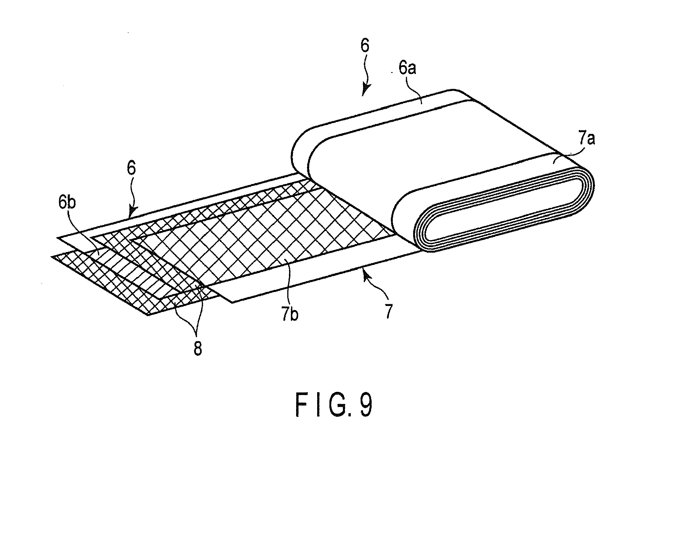

FIGS. 8 and 9 exemplify a non-aqueous electrolyte battery manufactured by the method according to the second embodiment. The battery shown in FIG. 8 is a sealed prismatic-shaped non-aqueous electrolyte battery. The non-aqueous electrolyte battery includes an outer can 1, a cap 2, a positive electrode output terminal 3, a negative electrode output terminal 4, and an electrode group 5. As shown in FIG. 8, the outer can 1 has a closed-end rectangular cylindrical shape and is formed from, for example, metal such as aluminum, aluminum alloy, iron, and stainless.

As shown in FIG. 9, the flat electrode group 5 contains a positive electrode 6 and a negative electrode 7 wound in a flat shape with a separator 8 therebetween. The positive electrode 6 contains a positive electrode current collector formed from, for example, metal foil in a strip shape, a positive electrode collecting tab 6a formed from a portion of the positive electrode current collector which has no positive electrode active material layer, and a positive electrode active material layer 6b formed in the positive electrode current collector excluding at least the positive electrode collecting tab 6a. On the other hand, the negative electrode 7 contains a negative electrode current collector formed from, for example, metal foil in a strip shape, a negative electrode collecting tab 7a formed from a portion of the negative electrode current collector which has no negative electrode active material layer, and a negative electrode active material layer 7b formed in the negative electrode current collector excluding at least the negative electrode collecting tab 7a.

The positive electrode 6, the separator 8, and the negative electrode 7 are wound with the positive electrode 6 and the negative electrode 7 being shifted so that the positive electrode collecting tab 6a is projected from the separator 8 in a winding axis direction of the electrode group and the negative electrode collecting tab 7a is projected from the separator 8 in the opposite direction thereof. By the winding described above, as shown in FIG. 9, the electrode group 5 has the positive electrode collecting tab 6a wound in a spiral form projected from one end face and the negative electrode collecting tab 7a wound in a spiral form projected from the other end face.

The electrode group 5 is impregnated with an electrolyte (not shown). The cap 2 in a rectangular plate shape is seamlessly welded to an open end of the outer can 1, for example, by laser. The cap 2 is formed from, for example, metal such as aluminum, aluminum alloy, iron, and stainless. The cap 2 and the outer can 1 are preferably formed from the same kind of metal.

As shown in FIG. 8, a gas relief vent 9 is provided near the center of an outer surface of the cap 2. The gas relief vent 9 includes a recess 9a in a rectangular shape provided on the outer surface of the cap 2 and a groove 9b in an X shape provided inside the recess 9a. The groove 9b is formed by, for example, press-molding the cap 2 in the thickness direction. A pouring hole 10 is open to the cap 2 and sealed after an electrolyte being poured in.

Positive electrode/negative electrode output terminals 3, 4 are fixed to both sides sandwiching the gas relief vent 9 therebetween on the outer surface of the cap 2 via an insulating gasket (not shown). For a lithium ion secondary battery using a carbon based material as the negative electrode active material, for example, aluminum or aluminum alloy is used as the positive electrode output terminal 3 and, for example, metal such as copper, nickel, and nickel-plated iron is used as the negative electrode output terminal 4. If lithium titanate is used as the negative electrode active material, instead of the above, aluminum or aluminum alloy may be used as the negative electrode output terminal 4.

One end of a positive electrode lead 11 is electrically connected to the positive electrode output terminal 3 by caulking or welding and the other end thereof is electrically connected to the positive electrode collecting tab 6a. One end of a negative electrode lead 12 is electrically connected to the negative electrode output terminal 4 by caulking or welding and the other end thereof is electrically connected to the negative electrode collecting tab 7a. The method of electrically connecting the positive and negative electrode leads 11, 12 to the positive and negative collecting tabs 6a, 7a respectively is not specifically limited and, for example, welding such as ultrasonic welding and laser welding can be cited.

Thus, currents can be picked up from the positive and negative electrode output terminals 3, 4 by the positive electrode output terminal 3 and the positive collecting tab 6a being electrically connected via the positive electrode lead 11 and the negative electrode output terminal 4 and the negative collecting tab 7a being electrically connected via the negative electrode lead 12.

The material of the positive and negative electrode leads 11, 12 is not specifically specified, but it is desirable to use the same material as the material of the positive and negative electrode output terminals 3, 4. For example, if the material of the output terminal is aluminum or aluminum alloy, it is preferable to use aluminum or aluminum alloy as the material of the lead. If the output terminal is formed from copper, it is desirable to use copper or the like as the material of the lead.

The separator and non-aqueous electrolyte will be described.

(Separator)

As the separator, for example, a porous film including polyethylene, polypropylene, cellulose, and polyvinylidene fluoride (PVdF) and nonwoven fabric made of synthetic resin can be cited. Among others, a porous film made of polyethylene or polypropylene melts at a fixed temperature to be able to block a current and is preferable in terms of safety improvement. Also among others, a porous film made of cellulose can contain more electrolytes than separators of other materials with the same thickness and the same percentage of void and thus, the conductivity of Li ions in the electrolyte can relatively be increased, which makes the porous film made of cellulose most desirable for a non-aqueous electrolyte battery which has a high-output at a large current.

(Non-aqueous electrolyte)

As the non-aqueous electrolyte, a liquid non-aqueous electrolyte prepared by dissolving an electrolyte in an organic solvent and a gel non-aqueous electrolyte prepared by compounding a liquid electrolyte and polymeric material can be cited.

The liquid non-aqueous electrolyte is prepared by dissolving an electrolyte in an organic solvent in a concentration ranging from 0.5 mol/l to 2.5 mol/l.

As the electrolyte, for example, lithium salt such as lithium perchlorate ($LiClO_4$), lithium hexafluorophosphate ($LiPF_6$), lithium tetrafluoroborate ($LiBF_4$), lithium hexafluoroarsenate ($LiAsF_6$), lithium trifluorometasulfonate ($LiCF_3SO_3$), or lithium bistrifluoromethylsulfonylimide [$LiN(CF_3SO_2)_2$] or a mixture thereof. An electrolyte that is difficult to oxidize even at a high potential and thus, $LiPF_6$ is most desirable.

As the organic solvent, for example, cyclic carbonate such as propylene carbonate (PC), ethylene carbonate (EC), and vinylene carbonate, chain carbonate such as diethyl carbonate (DEC), dimethyl carbonate (DMD), and methyl ethyl carbonate (MEC), cyclic ether such as tetrahydrofuran (THF), 2-methyl tetrahydrofuran (2MeTHF), and dioxolane (DOX), chain ether such as dimethoxyethane (DME) and diethoxyethane (DEE), γ-butyrolactone (GBL), acetonitrile (AN), sulfolane (SL) or the like can be cited. These organic solvents may be used alone or in combination of two or more thereof.

As the polymeric material, for example, polyvinylidene fluoride (PVdF), polyacrilonitrile (PAN), and polyethyleneoxide (PEO) can be cited.

As the non-aqueous electrolyte, room temperature molten salt (ionic melt) containing lithium ions, polymeric solid electrolyte, or inorganic solid electrolyte may be used.

The room temperature molten salt (ionic melt) refers to, among organic salts containing organic cations and anions, compounds that can be present as a liquid at room temperature (15°C to 25°C). As the room temperature molten salt, room temperature molten salt present as a liquid alone, room temperature molten salt liquefied by being combined with an electrolyte, and room temperature molten salt liquefied by being dissolved in an organic solvent can be cited. Generally, the melting point of room temperature molten salt used in a non-aqueous electrolyte battery is 25°C or below. The organic cation generally has a quaternary ammonium skeleton.

The polymeric solid electrolyte is prepared by dissolving an electrolyte in a polymeric material and solidifying the dissolved electrolyte.

The inorganic solid electrolyte is a solid material having conductivity of lithium ions.

In FIGS. 8 and 9, an example using an outer can as a case member of the battery is described, but the member that can be used as a case member is not limited to the outer can and, for example, a laminated film container may be used. The laminated film is a multilayer film formed from a metal layer and a resin layer coating the metal layer. The metal layer is preferably aluminum foil or aluminum alloy foil for the purpose of weight reduction. The resin layer is intended to reinforce the metal layer and polymers such as polypropylene (PP), polyethylene (PE), nylon, and polyethylene terephthalate (PET) can be used. The laminated film is formed by heat sealing.

The shape of the battery is not limited to the prismatic-shaped battery shown in FIGS. 8 and 9 and may have, for example, a flat shape, cylindrical shape, coin shape, button shape, sheet shape, or laminated shape. In addition to small batteries mounted on mobile electronic devices, batteries according to the embodiment can be applied to large batteries mounted on two-wheeled and four-wheeled vehicles.

According to the second embodiment described above, a positive electrode or negative electrode is manufactured by a method according to the first embodiment and therefore, the positive electrode or negative electrode can be manufactured without a current collector being torn or ruptured regardless of the thickness of slurry with which the current collector is coated.

Examples

Examples will be described below, but embodiments are not limited to examples shown below without deviating from the spirit and scope thereof.

(Example 1)

Positive electrode slurry is prepared by dispersing a positive electrode active material $LiCoO_2$, acetylene black and graphite as the positive electrode conductive agents, and polyvinylidene fluoride (PVdF) as the binder in N-methyl ethyl pyrolidone. When the slurry is sifted through a sieve with apertures of 100 $\mu$m and 150 $\mu$m, particles or aggregates of 100 to 150 $\mu$m are contained.

Aluminum foil of 12 $\mu$m in thickness and 600 mm in width is used as the positive electrode current collector, which serves also as a base material for coating of slurry.

A backup roll including a cored bar, a metal surface layer covering the cored bar, and annular protruding portions formed on the outer circumferential surface of the surface layer is used as the backup roll. The diameter up to the surface layer is 200 mm (R is 100 mm) and a length H is 800 mm. Four protruding portions are provided. Each protruding portion has a width h of 20 mm and an outside radius r of 100.25 mm. The intervals between the protruding portions are all equal and 150 mm. Thus, the value of (r-R) is 0.25 mm.

A current collector is supplied onto the backup roll in such a way that the angle of circumference θ becomes 0.2 radians. The current collector is run on the backup roll in such a way that the current collector is in contact with all four protruding portions of the backup roll.

A die head is used for coating of slurry. The interval between the die head and the current collector is measured before coating of slurry, which shows that the interval is 90 $\mu$m. A portion of the surface of the current collector that does not overlap with the protruding portions, that is, portions overlapping with the surface layer in three locations positioned between the protruding portions are each coated with slurry in the width of 145 mm by using the die head. The thickness of coated slurry before drying is 60 $\mu$m.

Though coating is 2000 m is carried out, the current collector is not torn or ruptured by particles or aggregates of 100 to 150 $\mu$m contained in the slurry by being stuck between the slurry discharge ports of the die head and the current collector.

(Examples 2 to 7)

Coating of 2000 m is carried out in the same manner as in Example except that values of (r-R), h, and θ are changed as shown in Table 1 below. Table 1 also shows the number of times of defect occurrence of tearing or rupture of the current collector.

(Comparative Example)

Coating of 2000 m is carried out in the same manner as in Example except that a backup roll in a cylindrical shape of 200 mm in diameter (R is 100 mm) without protruding portions is used.

In this case, the current collector is ruptured three times by particles or aggregates of 100 to 150 $\mu$m contained in the slurry being stuck between the slurry discharge ports of the die head and the current collector. Each time, the coating is stopped and repair work is done. In the repair work, the backup roll to which slurry before being dried is stuck by rupture and the support roll inside the drying furnace are first wiped and cleaned and the ruptured current collector is removed. Then, the current collector is tied together. During the work, it was necessary to lower the temperature inside the furnace to a temperature at which work is safely done for cleaning inside the furnace by workers and the re-supply of the current collector. A considerably long time is needed to cool and re-heat the furnace.

[Table 1]

| | r (mm) | R (mm) | (r-R) (mm) | h (mm) | H (mm) | θ (radian) | Number of times of defect occurrence (times) |
|---|---|---|---|---|---|---|---|
| Example 1 | 100.25 | 100 | 0.25 | 20 | 800 | 0.2 | 0 |
| Example 2 | 100.1 | 100 | 0.1 | 20 | 800 | 0.2 | 0 |
| Example 3 | 110.0 | 100 | 10 | 20 | 800 | 0.2 | 0 |
| Example 4 | 100.25 | 100 | 0.25 | 5 | 800 | 0.2 | 0 |
| Example 5 | 100.25 | 100 | 0.25 | 50 | 800 | 0.2 | 0 |
| Example 6 | 100.25 | 100 | 0.25 | 20 | 800 | 0.01 | 0 |
| Example 7 | 100.25 | 100 | 0.25 | 20 | 800 | 0.5 | 0 |
| Comparative Example | 100 | 100 | 0 | 0 | 800 | 0.2 | 3 |

According to the methods of Examples 1 to 7, as is evident from Table 1, tearing and rupture of the current collector during coating can be reduced. In contrast, according to Comparative Example in which the backup roll without protruding portions is used, tearing and rupture during coating occur more frequently than in Examples 1 to 7.

According to the manufacturing method of an electrode according to at least one embodiment described above, a current collector is supplied onto a backup roll having a plurality of annular protruding portions formed on the outer circumferential surface thereof and the surface of the current collector excluding a portion arranged on the annular protruding portions is coated with slurry containing active material and therefore, electrodes can be manufactured without the current collector being torn or ruptured regardless of the thickness of slurry with which the current collector is coated.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

Reference Signs List

1...Outer can; 2...Cap; 3...Positive electrode output terminal; 4...Negative electrode output terminal; 5...Electrode group; 6...Positive electrode; 6a...Positive electrode collecting tab; 6b...Layer containing positive electrode active material; 7...Negative electrode; 7a...Negative electrode collecting tab; 7b...Layer containing negative electrode active material; 8...Separator; 9... Gas relief vent; 9a...Recess; 9b...Groove; 10...Pouring hole; 11...Positive electrode lead; 12...Negative electrode lead; 21...Backup roll; 22...Cored bar; 23...Surface layer; 24...Protruding portion; C...Current collector; 25...Die head; 26...Liquid storage portion; 27...Die slit; 28...Slurry discharge port; 29...Layer containing active material; 30...Electrode; 31...Collecting tab

## Claims

**1.** A manufacturing method of an electrode, comprising:

supplying a current collector onto a backup roll comprising annular protruding portions formed on an outer circumferential surface of the backup roll;
coating a surface of the current collector excluding a portion arranged on a plurality of the annular protruding portions with slurry containing an active material ied; and
drying the slurry.

**2.** The manufacturing method of an electrode according to claim 1,
wherein the backup roll satisfies a following formula (1):

$$0.1 \leq (r-R) \leq 10 \qquad 1)$$

where r is an outside radius (mm) of the annular protruding portion and R is an inside radius (mm) of the annular protruding portion.

3. The manufacturing method of an electrode according to claim 2,
wherein the backup roll satisfies a following formula (2):

$$5 \leq h \leq 50 \qquad 2)$$

where h is a width (mm) of the annular protruding portion.

4. The manufacturing method of an electrode according to claim 1 or 2,
wherein the current collector is in contact with the annular protruding portion of the backup roll in such a way that a following formula (3) is satisfied:

$$0.01 \leq \theta \leq 0.5 \qquad 3)$$

where $\theta$ is an angle of circumference (radian) corresponding to a length of an arc in the portion where the current collector is in contact with the annular protruding portion of the backup roll.

5. A manufacturing method of a non-aqueous electrolyte battery comprising a positive electrode, a negative electrode, and a non-aqueous electrolyte,
wherein at least an electrode of the positive electrode and the negative electrode is manufactured by the method according to any one of claims 1 to 4.

# FIG. 1

# FIG. 2

FIG.3

FIG.4

FIG. 5

FIG. 6

FIG. 7

FIG. 8

FIG. 9

**EP 2 800 172 A1**

## INTERNATIONAL SEARCH REPORT

| International application No. |
|---|
| PCT/JP2011/080315 |

**A. CLASSIFICATION OF SUBJECT MATTER**
*H01M4/139(2010.01)i*

According to International Patent Classification (IPC) or to both national classification and IPC

**B. FIELDS SEARCHED**

Minimum documentation searched (classification system followed by classification symbols)
H01M4/139, B05C5/00-5/04

Documentation searched other than minimum documentation to the extent that such documents are included in the fields searched
Jitsuyo Shinan Koho        1922-1996    Jitsuyo Shinan Toroku Koho    1996-2012
Kokai Jitsuyo Shinan Koho   1971-2012    Toroku Jitsuyo Shinan Koho    1994-2012

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2010-225467 A  (Toyota Motor Corp.), 07 October 2010 (07.10.2010), claim 1 (Family: none) | 1-5 |
| A | JP 2006-175415 A  (Sony Corp.), 06 July 2006 (06.07.2006), fig. 6 (Family: none) | 1-5 |
| A | JP 2008-066050 A  (Matsushita Electric Industrial Co., Ltd.), 21 March 2008 (21.03.2008), claim 1 (Family: none) | 1-5 |

| ☒ Further documents are listed in the continuation of Box C. | ☐ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 16 March, 2012 (16.03.12) | 27 March, 2012 (27.03.12) |

| Name and mailing address of the ISA/ Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2011/080315

C (Continuation).   DOCUMENTS CONSIDERED TO BE RELEVANT

| Category* | Citation of document, with indication, where appropriate, of the relevant passages | Relevant to claim No. |
|---|---|---|
| A | JP 4-061959 A  (Furukawa Aluminum Co., Ltd.), 27 February 1992 (27.02.1992), fig. 1 (Family: none) | 1-5 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002313327 A
- JP 4061959 A
- JP 2007029789 A
- JP 2003157835 A